# FASCICULE DE BREVET EUROPEEN

(11) **EP 3 176 469 B1**
(45) Date de publication et mention de la délivrance du brevet: **08.08.2018**
(21) Numéro de dépôt: 16199833.1
(22) Date de dépôt: 21.11.2016
(51) Int. Cl.: F16H 48/36, F16H 48/08

(54) **SYSTEME DE PILOTAGE A DIFFERENTIEL MECANIQUE A FAIBLE ENCOMBREMENT**
LENKSYSTEM MIT MECHANISCHEM DIFFERENZIAL GERINGEN PLATZBEDARFS
STEERING SYSTEM WITH LOW-BULK MECHANICAL DIFFERENTIAL

(30) Priorité: 03.12.2015 FR 1502520
(43) Date de publication de la demande: 07.06.2017
(73) Titulaire: NEXTER Systems, 43200 Roanne (FR)
(72) Inventeur: RIGAULT, Guillaume, 18023 BOURGES (FR)
(74) Mandataire: Debay, Yves

(56) Documents cités:
- JP-A- 2009 133 426
- US-B2- 8 388 480

## Description

### DOMAINE TECHNIQUE DE L'INVENTION

L'invention se rapporte au domaine des systèmes de pilotage à différentiel mécanique, en particulier pour véhicules.

### ETAT DE LA TECHNIQUE ANTERIEURE

**.** Les différentiels sont des systèmes mécaniques comportant un organe d'entrée et au moins deux organes de sortie qui ont pour fonction d'assurer une distribution de vitesse de rotation par répartition de l'effort cinématique et des vitesses de rotation, de façon adaptée, immédiate et automatique, aux besoins d'un ensemble mécanique. Un des exemples les plus courants d'utilisation se trouve dans le cadre des véhicules automobiles où le différentiel permet aux roues motrices de tourner à des vitesses différentes lors du passage d'une courbe. Les roues qui se trouvent situées à l'extérieur du virage sont amenées à tourner plus vite que celles qui sont situées à l'intérieur du virage. Cette différence de rotation entre les deux organes de sortie, ou entre au moins un organe de sortie et l'organe d'entrée est appelée vitesse différentielle, puisque les vitesses de rotation des différents organes du différentiel sont différentes.

Les différentiels classiques divisent le couple généralement de façon égale entre les roues motrices. Cependant, pour un contrôle optimal du véhicule, la roue motrice à l'extérieur du virage devrait offrir plus de couple que la roue motrice à l'intérieur du virage. En effet, l'augmentation du couple appliquée à la roue motrice à l'extérieur du virage, contribue à propulser et diriger le véhicule dans le virage, et cela est particulièrement bénéfique dans les virages négociés à haute vitesse.

De plus, la traction peut varier entre les roues motrices. Si la traction sous l'une des roues motrices est assez faible, comme par exemple sur de la glace, le différentiel répartit le couple de telle sorte que la roue ayant la traction la plus faible tourne, tandis que l'autre roue avec une meilleure traction reste au repos.

Cette faiblesse a pu être compensée par le développement de différentiels autobloquants ou à glissement limité, agencés pour permettre la détection d'une différence de couple entre les deux axes de sortie et restreindre l'action du différentiel dans les cas d'adhérence insuffisante sur un de ces deux axes de sortie.

Cependant, ce type de différentiels autobloquants ou à glissement limité tend à amener les deux roues motrices à la même vitesse, ce qui porte atteinte à la manoeuvrabilité, en particulier dans les virages, lorsque le véhicule se déplace à vive allure. Pour remédier à ce problème, plusieurs solutions ont été envisagées.

Le brevet US 8388480 propose un système de pilotage d'un différentiel conique au moyen d'un train épicycloïdal dont les sorties sont reliées à un porte-satellite du différentiel conique, à l'une des roues du véhicule et à un moteur de pilotage. L'ensemble du système est installé dans l'axe des roues et nécessite d'avoir une voie large entre les roues motrices.

La demande DE102006022174 propose une solution de pilotage d'un différentiel conique par utilisation de deux trains épicycloïdaux, un pour chaque sortie du différentiel conique. Ainsi, l'axe du porte-satellite est lié à la cage du différentiel, la couronne est liée à la sortie du différentiel et le planétaire est lié à un frein. Le pilotage est alors effectué par freinage de l'un ou l'autre planétaire. Ce type de système est encore une nouvelle fois particulièrement adapté aux véhicules possédant une voie large puisqu'il est installé sur l'axe des roues.

Le brevet US 7311631 propose, quant à lui, une solution de pilotage d'un différentiel conique par utilisation de deux trains épicycloïdaux partageant une même couronne. Le planétaire du premier train est lié à l'une des roues du véhicule et celui du second est lié au porte-satellite du différentiel conique. Le pilotage est effectué par mise en rotation du porte-satellite du second train, celui du premier étant fixe. Là aussi, l'ensemble de ce système est installé dans l'axe des roues, impliquant un encombrement important suivant cet axe. En outre, le second inconvénient de ce type d'architecture est le grand nombre de pièces, augmentant les coûts mais également le risque de voir arriver des problèmes mécaniques.

La demande JP 2009 133426 A divulgue un système de pilotage à différentiel selon le préambule de la revendication 1.

La mise en place d'un tel système dans l'axe des roues conduit par ailleurs à un raccourcissement des bielles des joints de transmission homocinétiques (joints de cardans). Il en résulte des angles trop importants entre les bielles d'entrée et de sortie de ces joints, ce qui accroît les efforts qu'ils doivent subir.

### EXPOSE DE L'INVENTION

La présente invention a donc pour objet de proposer un différentiel mécanique à faible encombrement, permettant de palier au moins une partie des inconvénients de l'art antérieur, en proposant un système de pilotage à différentiel mécanique ayant une architecture proposant un encombrement réduit en particulier dans l'axe des roues permettant de réduire les efforts subis par les joints de transmission homocinétiques. L'invention peut être installée dans des véhicules ayant une voie qui peut varier de 2,5 mètres (véhicules 4x4) à plus de 3 mètres (véhicules 8x8).

**A** cet effet, l'invention concerne un système de pilotage à différentiel comprenant :
- un arbre d'entrée (A) comprenant
   ∘ à son extrémité un premier pignon (1) conique solidaire à l'arbre d'entrée (A), et
   ∘ un train épicycloïdal comprenant :
      ▪ un second pignon (2) planétaire solidaire de l'arbre d'entrée (A),
      ▪ au moins trois pignons satellites (3) coopérant avec le second pignon planétaire (2) et solidarisés entre eux par un porte-satellites (11) sur lequel ils sont montés pivotant, et
      ▪ une couronne (4) coopérant avec les au moins trois pignons satellites (3),
   ∘ un troisième pignon (5) conique libre en rotation autour de l'arbre d'entrée (A), situé entre le second pignon (2) planétaire et le premier pignon (1) conique,
- un premier arbre de sortie (B) comprenant :
   ∘ un quatrième pignon (6) conique solidaire du premier arbre de sortie (B) et coopérant avec le troisième pignon (5) conique monté en rotation autour de l'arbre d'entrée (A), et
   ∘ à son extrémité un cinquième pignon (7) conique incorporé dans un moyen différentiel (Δ) et solidaire du premier arbre de sortie (B),
- un second arbre de sortie (C) comprenant :
   ∘ à son extrémité un sixième pignon (8) conique solidaire du second arbre de sortie (C) et incorporé dans le moyen différentiel (Δ), et
   ∘ un septième pignon (9) conique libre en rotation autour du second arbre de sortie (C), le septième pignon (9) conique coopérant avec le premier pignon (1) conique solidaire de l'arbre d'entrée (A), le septième pignon (9) conique étant solidaire d'une cage porte-satellites (D) du moyen dififérentiel(Δ),
- la cage porte-satellites (D) du moyen différentiel (Δ) comprend en son sein au moins un huitième pignon (10) conique monté solitairement sur un axe (E, F) perpendiculaire aux axes (C, B), et coopérant simultanément avec les cinquième et sixième pignons (8, 7) coniques, la cage porte-satellites (D) du moyen différentiel (Δ) étant montée libre en rotation autour des premier arbre de sortie (B) et second arbre de sortie (C),
dans lequel la couronne (4) est solidaire du troisième pignon (5) conique libre en rotation autour de l'arbre d'entrée (A), la rotation du troisième pignon (5) permettant de moduler les vitesses de rotation relatives des premier (B) et second arbre de sortie (C) qui sont entraînés par ailleurs en rotation par le moyen différentiel (Δ).

Ainsi, le système de pilotage repose sur l'utilisation d'un différentiel conique dont la vitesse est pilotée par une cascade de pignons par l'intermédiaire d'un train épicycloïdal disposé dans l'axe longitudinal du véhicule. Une telle architecture facilite l'intégration du système de pilotage dans tous types de véhicules et permet de réduire les efforts subis par les joints de transmission homocinétiques.

Selon une particularité, la rotation et le sens de rotation du porte-satellites (11) sont contrôlés par un moteur (12), de préférence un moteur électrique, hydraulique ou pneumatique.

Selon une autre particularité, les dimensions des différents pignons sont choisies afin que le porte-satellites (11) soit sensiblement immobile lorsque les premier et second arbres de sortie (B, C) ont un sens et une vitesse de rotation identiques.

Ainsi, en ligne droite, la vitesse de pilotage est pratiquement nulle, c'est-à-dire que le moteur ne tourne pas ou peu. Concrètement le but recherché est de moins solliciter mécaniquement le moteur (12) ce qui permet d'accroître la précision du pilotage. Si la vitesse de rotation du moteur (12) reste modérée en ligne droite, il est possible de disposer à la sortie du moteur (12) un réducteur ayant un ratio de réduction important, ce qui permettra de faire travailler le moteur (12) avec un couple plus faible. Même s'il est possible théoriquement de faire fonctionner l'invention avec un moteur (12) tournant à une vitesse quelconque, il est clair que si la vitesse de rotation du moteur (12) en ligne droite, reste inférieure par exemple à 10% de sa vitesse de rotation maximale, il sera possible d'augmenter fortement cette vitesse pour réaliser les corrections souhaitées. Les valeurs réelles des vitesses dépendront bien entendu des caractéristiques (masse, géométrie, puissance des motorisations) du véhicule considéré et il n'est pas possible de les préciser ici.

Avantageusement, les dimensions des premier, second, troisième, quatrième et septième pignons (1, 2, 5, 6 et 9) et de la couronne (4) sont choisies afin de satisfaire à +/- N % près l'équation suivante : Z₂.Z₉.Z₅=Z₁.Z₆.Z₄. avec
Z₁ le nombre de dents du premier pignon (1)
Z₂ le nombre de dents du second pignon (2)
Z₄ le nombre de dents de la couronne (4)
Z₅ le nombre de dents du troisième pignon (5)
Z₆ le nombre de dents du quatrième pignon (6)
Z₉ le nombre de dents du septième pignon (9)
N étant inférieur ou égal à 10%.

### BREVE DESCRIPTION DES FIGURES

D'autres caractéristiques, détails et avantages de l'invention ressortiront à la lecture de la description qui suit en référence aux figures annexées :
- la figure 1, est une représentation schématique du système
- la figure 2, est une représentation 3D du système

### DESCRIPTION DETAILLEE DE DIFFERENTS MODES DE REALISATION DE

### L'INVENTION

De nombreuses combinaisons peuvent être envisagées sans sortir du cadre de l'invention. L'homme de métier choisira l'une ou l'autre en fonction des contraintes économiques, ergonomiques, dimensionnelles ou autres qu'il devra respecter.

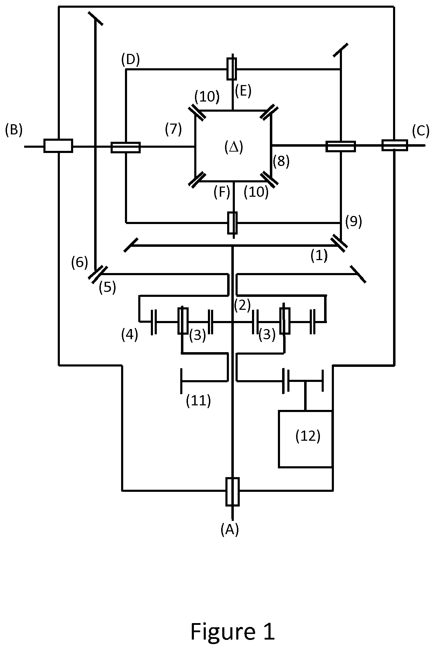

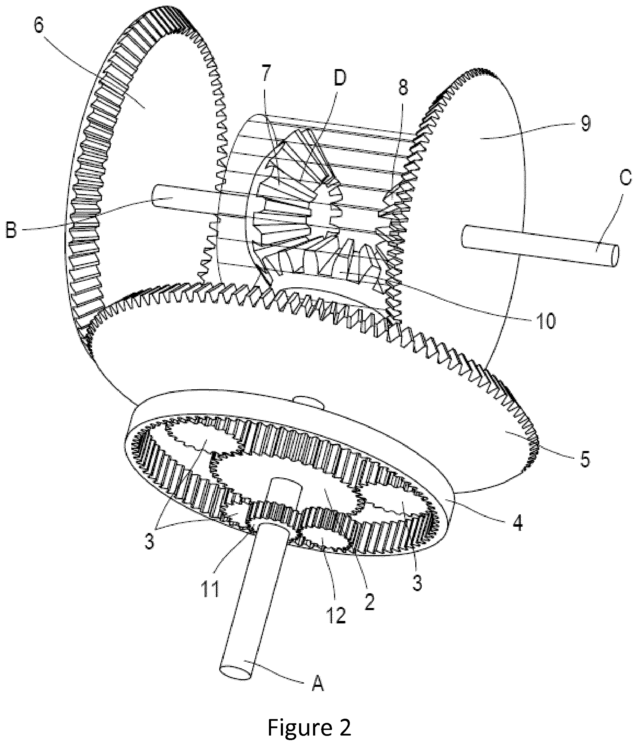

Plus particulièrement, les figures 1 et 2 illustrent un mode de réalisation préféré mais non limitatif de la présente invention.

Système de pilotage à différentiel comprenant :
- un arbre d'entrée (A) comprenant
   ∘ à son extrémité un premier pignon (1) conique solidaire de l'arbre d'entrée (A), et
   ∘ un train épicycloïdal comprenant :
      ▪ un second pignon (2) planétaire solidaire de l'arbre d'entrée (A),
      ▪ au moins trois pignons satellites (3) montés pivotant sur un porte-satellite (11) coopérant avec le second pignon planétaire (2) et montés pivotant sur un porte-satellite (11) piloté directement ou indirectement par un moteur (12), de préférence un moteur électrique, et
      ▪ une couronne (4) coopérant avec les au moins trois pignons satellites (3),
   ∘ un troisième pignon (5) conique libre en rotation autour de l'arbre d'entrée (A), situé entre le second pignon (2) planétaire et le premier pignon (1) conique, le troisième pignon (5) conique étant solidaire de la couronne (4),
- un premier arbre de sortie (B) comprenant :
   ∘ un quatrième pignon (6) conique solidaire du premier arbre de sortie (B) et coopérant avec le troisième pignon (5) conique monté en rotation autour de l'arbre d'entrée (A), et
   ∘ à son extrémité un cinquième pignon (7) conique incorporé dans un moyen différentiel (Δ) et solidaire au premier arbre de sortie (B),
- un second arbre de sortie (C) comprenant :
   ∘ à son extrémité un sixième pignon (8) conique solidaire au second arbre de sortie (C) et incorporé dans le moyen différentiel (Δ), et
   ∘ un septième pignon (9) conique libre en rotation autour du second arbre de sortie (C), le septième pignon (9) conique coopérant avec le premier pignon (1) conique solidaire de l'arbre d'entrée (A), le septième pignon (9) conique étant solidaire d'une cage porte-satellites (D) du moyen différentiel (Δ),
- la cage porte-satellites (D) du moyen différentiel (Δ) comprend en son sein au moins un huitième pignon (10) conique coopérant simultanément avec les cinquième et sixième pignons (7, 8) coniques, la cage porte-satellites (D) du moyen différentiel étant montée libre en rotation autour des premier et second arbres de sortie (B) et (C),

Ainsi, lorsqu'un tel système est utilisé dans un véhicule, le moteur principal du véhicule fournissant la rotation de l'arbre d'entrée (A) permet de faire tourner le premier pignon (1) qui entraine la cage porte-satellites (D) du moyen différentiel (Δ) au moyen d'une coopération avec le septième pignon (9) conique monté coaxial en rotation sur les axes de sortie (B, C) et solidaire de la cage (D). Le moyen différentiel (Δ) comprend : la cage (D), les huitièmes pignons coniques (10), et les cinquième et sixième pignons coniques (7,8).

D'une façon classique dans un différentiel, la rotation du huitième pignon (10) conique par rapport à la cage porte-satellites (D) est effectuée en fonction du différentiel de vitesse gauche droite lié à un virage. Dans un mode particulier, la cage porte-satellites (D) comprend deux pignons (10) coniques montés solidaires des axes (E, F) monté pivotants sur la cage (D) selon une direction perpendiculaire aux axes (B, C). Lorsque le véhicule circule en ligne droite les roues solidaires des axes (B) et (C), sont entraînées à même vitesse par la motorisation principale du véhicule qui entraîne l'arbre d'entrée (A). La rotation est communiquée aux roues via la cage (D) qui entraîne les pignons coniques (10) qui entraînent eux même les cinquième et sixième pignons (8, 7) coniques.

Lorsque l'on cherche à modifier l'écart de vitesse entre les axes (B) et (C), le moteur (12) est actionné. Il agit sur l'axe (B) par l'intermédiaire de la couronne (4). Il en résulte une modification des rapports de vitesse de rotation entre la roue gauche et la roue droite par rapport à ce que propose automatiquement le différentiel (Δ) seul. Une telle disposition permet d'améliorer le contrôle du véhicule dans les virages en évitant en particulier survirage ou sous virage. Les roues sont respectivement liées aux premier et second arbres de sortie (B et C).

En particulier, la roue du premier arbre de sortie est entrainée à la fois par le sixième pignon conique (7) et par la mise en rotation du quatrième pignon (6) conique coopérant avec le troisième pignon (5) conique libre en rotation autour de l'arbre d'entrée (A). Le troisième pignon (5) conique engrène par l'intermédiaire de la couronne (4) avec le train épicycloïdal dont le planétaire (2) est solidaire de l'arbre d'entrée (A) recevant la force motrice et dont les satellites (3) sont montés pivotant sur un porte-satellites (11) lui-même entrainé par le moteur électrique (12).

Dans un mode de réalisation particulier, les dimensions des différents pignons sont choisies afin que le moteur (12) pilotant le porte-satellites (11) soit pratiquement à l'arrêt lorsque le véhicule se déplace en ligne droite, donc lorsque les premier et second arbres de sortie (B, C) ont un sens et une vitesse de rotation identiques. Une telle disposition a pour but de diminuer l'énergie consommée par le moteur (12) ainsi que la puissance nécessaire. Cet objectif est un objectif théorique. Il est bien entendu que les considérations mécaniques de conception conduisent à tolérer un certain écart entre les dimensions des pignons conduisant à une légère rotation du moteur (12), même en ligne droite.

Plus particulièrement, dans un mode préféré, les dimensions des premier, second, troisième, quatrième et septième pignons (1,2, 5, 6 et 9) et de la couronne (4) sont choisies afin de satisfaire l'équation suivante : Z₂.Z₉.Z₅=Z₁.Z₆.Z₄. avec :
- Z₁ le nombre de dents du premier pignon (1)
- Z₂ le nombre de dents du second pignon (2)
- Z₄ le nombre de dents de la couronne (4)
- Z₅ le nombre de dents du troisième pignon (5)
- Z₆ le nombre de dents du quatrième pignon (6)
- Z₉ le nombre de dents du septième pignon (9)
- Cette condition théorique sera recherchée à +/- N % près, c'est à dire Z₂.Z₉.Z₅ = Z₁.Z₆.Z₄ x (1+/-N%) avec N inférieur ou égal à 10%

A titre d'exemple, les dimensions des différents éléments du système peuvent être les suivantes :
- premier pignon (1) : diamètre D₁ = 72 mm, nombre de dents Z₁ = 24,
- second pignon (2) : diamètre D₂ = 63 mm, nombre de dents Z₂ = 21,
- pignons satellites (3) : diamètre D₃ = 51 mm, nombre de dents Z₃ = 17,
- couronne (4) : diamètre D₄ = 165 mm, nombre de dents Z₄ = 55,
- troisième pignon (5) : diamètre D₅ = 207 mm, nombre de dents Z₅ = 69,
- quatrième pignon (6) : diamètre D₆ = 162 mm, nombre de dents Z₆ = 54,
- cinquième pignon (7) : diamètre D₇ = 51 mm, nombre de dents Z₇ = 17,
- sixième pignon (8) : diamètre D₈ = 51 mm, nombre de dents Z₈ = 17,
- septième pignon (9) : diamètre D₉ = 147 mm, nombre de dents Z₉ = 49,
- huitième pignon (10) : diamètre D₁₀ = 54 mm, nombre de dents Z₁₀ = 18, et
- porte-satellites (11) : diamètre D₁₁ = 105 mm, nombre de dents Z₁₁ = 35.

Ceci conduit à : Z₂.Z₉.Z₅ = 21 x 49 x 69 = 71001 et Z₁.Z₆.Z₄= 24 x 54 x 55 = 71280. Soit un écart de 4% environ entre les deux expressions.

Ceci permet de limiter la vitesse du moteur (12) lorsque le véhicule progresse en ligne droite. On sollicite ainsi beaucoup moins mécaniquement le moteur (12) ce qui permet d'accroître la précision du pilotage. Une vitesse de rotation du moteur (12) modérée en ligne droite permet par ailleurs de disposer un réducteur ayant un ratio de réduction important en sortie du moteur (12), ce qui permet de faire travailler le moteur (12) avec un couple plus faible. Un écart de l'ordre de +/-10% sur les ratios précédents permet ainsi de dimensionner le moteur (12) d'une façon raisonnable tout en ayant de fortes capacités de corrections du fonctionnement du différentiel (correction de survirage ou de sous-virage).

On comprendra aisément à la lecture de la présente demande que les particularités de la présente invention, comme généralement décrites et illustrées dans les figures, puissent être arrangées et conçues selon une grande variété de configurations différentes. Ainsi, la description de la présente invention et les figures afférentes ne sont pas prévues pour limiter la portée de l'invention mais représentent simplement des modes de réalisation choisis.

Ainsi l'homme du métier pourra adapter la taille du système à son utilisation en suivant une simple règle de proportionnalité sans sortir du cadre de l'invention.

L'homme de métier comprendra que les caractéristiques techniques d'un mode de réalisation donné peuvent en fait être combinées avec des caractéristiques d'un autre mode de réalisation, à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

## Revendications

1. Système de pilotage à différentiel (Δ) comprenant :
un arbre d'entrée (A) comprenant à son extrémité un premier pignon (1) conique solidaire de l'arbre d'entrée (A), et
**caractérisé en ce que** l'arbre d'entrée (A) comprend également :
∘ un train épicycloïdal comprenant :
▪ un second pignon (2) planétaire solidaire de l'arbre d'entrée (A),
▪ au moins trois pignons satellites (3) coopérant avec le second pignon planétaire (2) et solidarisés entre eux par un porte-satellites (11) sur lequel ils sont montés pivotant, et
▪ une couronne (4) coopérant avec les au moins trois pignons satellites (3),
∘ un troisième pignon (5) conique libre en rotation autour de l'arbre d'entrée (A), situé entre le second pignon (2) planétaire et le premier pignon (1) conique,
le système de pilotage à différentiel (Δ) comprenant également :
• un premier arbre de sortie (B) comprenant :
∘ un quatrième pignon (6) conique solidaire du premier arbre de sortie (B) et coopérant avec le troisième pignon (5) conique monté en rotation autour de l'arbre d'entrée (A), et
∘ à son extrémité un cinquième pignon (7) conique incorporé dans un moyen différentiel (Δ) et solidaire du premier arbre de sortie (B),
• un second arbre de sortie (C) comprenant :
∘ à son extrémité un sixième pignon (8) conique solidaire du second arbre de sortie (C) et incorporé dans le moyen différentiel (Δ), et
∘ un septième pignon (9) conique libre en rotation autour du second arbre de sortie (C), le septième pignon (9) conique coopérant avec le premier pignon (1) conique solidaire de l'arbre d'entrée (A), le septième pignon (9) conique étant solidaire d'une cage porte-satellites (D) du moyen différentiel (Δ),
• la cage porte-satellites (D) du moyen différentiel (Δ) comprenant en son sein au moins un huitième pignon (10) conique monté solidaire d'un axe (E,F) perpendiculaire aux arbres de sorties (C,B) et coopérant simultanément avec les cinquième et sixième pignons (8, 7) coniques, la cage porte-satellites (D) du moyen différentiel (Δ) étant montée libre en rotation autour des premier arbre de sortie (B) et second arbre de sortie (C),
dans lequel la couronne (4) est solidaire du troisième pignon (5) conique libre en rotation autour de l'arbre d'entrée (A), la rotation du troisième pignon (5) permettant de moduler les vitesses de rotation relatives des premier (B) et second arbre de sortie (C) qui sont entraînés par ailleurs en rotation par le moyen différentiel (Δ).

2. Système de pilotage à différentiel selon la revendication 1, **caractérisé en ce que** la rotation et le sens de rotation du porte-satellites (11) sont contrôlés par un moteur (12).

3. Système de pilotage à différentiel selon la revendication 2, **caractérisé en ce que** ledit moteur est un moteur électrique, hydraulique ou pneumatique.

4. Système de pilotage à différentiel selon l'une des revendications 1 à 3, **caractérisé en ce que** les dimensions des différents pignons sont choisies afin que le porte-satellites (11) soit sensiblement immobile lorsque les premier et second arbres de sortie (B, C) ont un sens et une vitesse de rotation identiques.

5. Système de pilotage à différentiel selon l'une des revendications 1 à 4, **caractérisé en ce que** les dimensions des premier, second, troisième, quatrième et septième pignons (1,2, 5, 6 et 9) et de la couronne (4) sont choisies afin de satisfaire à +/- N % près l'équation suivante : Z₂.Z₉.Z₅=Z₁.Z₆.Z₄. avec
Z₁ le nombre de dents du premier pignon (1)
Z₂ le nombre de dents du second pignon (2)
Z₄ le nombre de dents de la couronne (4)
Z₅ le nombre de dents du troisième pignon (5)
Z₆ le nombre de dents du quatrième pignon (6)
Z₉ le nombre de dents du septième pignon (9)
N étant inférieur ou égal à 10%.

## Patentansprüche

1. Differential-Lenksystem (Δ), umfassend:
eine Antriebswelle (A), umfassend an ihrem Ende ein erstes Kegelritzel (1), das fest mit der Antriebswelle (A) verbunden ist, und
**dadurch gekennzeichnet, dass** die Antriebswelle (A) ebenfalls umfasst:
∘ ein Planetengetriebe, umfassend:
▪ ein zweites Planetenritzel (2), das fest mit der Antriebswelle (A) verbunden ist,
▪ mindestens drei Satellitenritzel (3), die mit dem zweiten Planetenritzel (2) zusammenwirken und untereinander fest durch einen Planetenträger (11) verbunden sind, auf dem sie schwenkbar montiert sind, und
▪ ein Hohlrad (4), das mit den mindestens drei Satellitenritzeln (3) zusammenwirkt,
∘ ein drittes Kegelritzel (5), das um die Antriebswelle (A) frei drehbar ist, und sich zwischen dem zweiten Planetenritzel (2) und dem ersten Kegelritzel (1) befindet,
wobei das Differential-Lenksystem (Δ) ebenfalls umfasst:
• eine erste Abtriebswelle (B), umfassend:
∘ ein viertes Kegelritzel (6), das mit der ersten Abtriebswelle (B) fest verbunden ist und mit dem dritten Kegelritzel (5), das drehbar um die Antriebswelle (A) montiert ist, zusammenwirkt, und
∘ ein fünftes Kegelritzel (7) an ihrem Ende, das in eine Differentialvorrichtung (Δ) eingebaut und fest mit der ersten Abtriebswelle (B) verbunden ist,
• eine zweite Abtriebswelle (C), umfassend:
∘ ein sechstes Kegelritzel (8) an ihrem Ende, das fest mit der zweiten Abtriebswelle (C) verbunden und in die Differentialvorrichtung (Δ) eingebaut ist, und
∘ ein siebtes Kegelritzel (9), das um die zweite Abtriebswelle (C) frei drehbar ist, wobei das siebte Kegelritzel (9) mit dem ersten Kegelritzel (1), das fest mit der Antriebswelle (A) verbunden ist, zusammenwirkt, wobei das siebte Kegelritzel (9) fest mit einem Planetenträgerkäfig der Differentialvorrichtung (Δ) verbunden ist,
• wobei der Planetenträgerkäfig (D) der Differentialvorrichtung (Δ) in seiner Mitte ein achtes Kegelritzel (10) umfasst, das fest an einer Achse (E, F) montiert ist, die senkrecht zu den Abtriebswellen (C, B) ist und gleichzeitig mit dem fünften und sechsten Kegelritzel (8, 7) zusammenwirkt, wobei der Planetenträgerkäfig (D) der Differentialvorrichtung (Δ) um die erste Abtriebswelle (B) und die zweite Abtriebswelle (C) frei drehbar montiert ist,
wobei das Hohlrad (4) fest mit dem dritten Kegelritzel (5), das um die Antriebswelle (A) frei drehbar ist, verbunden ist, wobei die Drehung des dritten Ritzels (5) es ermöglicht, die relativen Drehgeschwindigkeiten der ersten (B) und zweiten Abtriebswelle (C) zu modulieren, die zudem von der Differentialvorrichtung (A) angetrieben werden.

2. Differential-Lenksystem nach Anspruch 1, **dadurch gekennzeichnet, dass** die Drehung und die Drehrichtung des Planetenträgers (11) von einem Motor (12) gesteuert werden.

3. Differential-Lenksystem nach Anspruch 2, **dadurch gekennzeichnet, dass** der Motor ein Elektro-, Hydraulik- oder Pneumatikmotor ist.

4. Differential-Lenksystem nach einem der Ansprüche 1 bis 3, **dadurch gekennzeichnet, dass** die Abmessungen der unterschiedlichen Ritzel ausgewählt sind, damit der Planetenträger (11) im Wesentlichen unbeweglich ist, wenn die erste und zweite Abtriebswelle (B, C) eine identische Drehrichtung und -geschwindigkeit aufweisen.

5. Differential-Lenksystem nach einem der Ansprüche 1 bis 4, **dadurch gekennzeichnet, dass** die Abmessungen des ersten, zweiten, dritten, vierten und siebten Ritzels (1, 2, 5, 6 und 9) und des Hohlrads (4) ausgewählt sind, um sich bis +/- N % an die folgende Gleichung anzunähern: Z₂.Z₉.Z₅=Z₁.Z₆.Z₄. wobei
Z₁ die Anzahl von Zähnen des ersten Ritzels ist (1)
Z₂ die Anzahl von Zähnen des zweiten Ritzels ist (2)
Z₄ die Anzahl von Zähnen des Hohlrads ist (4)
Z₅ die Anzahl von Zähnen des dritten Ritzels ist (5)
Z₆ die Anzahl von Zähnen des vierten Ritzels ist (6)
Z₉ die Anzahl von Zähnen des siebten Ritzels ist (9)
N kleiner als oder gleich 10 % ist.

## Claims

1. Differential steering system (Δ) comprising:
an input shaft (A) comprising at its end a first bevel gear (1) integral with the input shaft (A), and
**characterised in that** the input shaft (A) also comprises:
∘ an epicycloidal gear train comprising:
▪ a second sun gear (2) integral with the input shaft (A),
▪ at least three planet gears (3) cooperating with the second sun gear (2) and connected to each other by a planetary carrier (11) on which they are mounted pivotably, and
▪ an annulus (4) cooperating with the at least three planet gears (3),
∘ a third bevel gear (5) freely rotatable about the input shaft (A), situated between the second sun gear (2) and the first bevel gear (1),
the differential steering system (Δ) also comprising:
• a first output shaft (B) comprising:
∘ a fourth bevel gear (6) integral with the first output shaft (B) and cooperating with the third bevel gear (5) mounted rotatably about the input shaft (A), and
∘ at its end a fifth bevel gear (7) incorporated in a differential means (Δ) and integral with the first output shaft (B),
• a second output shaft (C) comprising:
∘ at its end a sixth bevel gear (8) integral with the second output shaft (C) and incorporated in the differential means (Δ), and
∘ a seventh bevel gear (9) freely rotatable about the second output shaft (C), the seventh bevel gear (9) cooperating with the first bevel gear (1) integral with the input shaft (A), the seventh bevel gear (9) being integral with a planetary carrier cage (D) of the differential means (Δ),
• the planetary carrier cage (D) of the differential means (Δ) comprising within it at least one eighth bevel gear (10) mounted integrally with a shaft (E, F) perpendicular to the output shafts (C, B) and cooperating simultaneously with the fifth and sixth bevel gears (8, 7), the planetary carrier cage (D) of the differential means (Δ) being mounted so as to be freely rotatable about the first output shaft (B) and second output shaft (C),
in which the annulus (4) is integral with the third bevel gear (5) freely rotatable about the input shaft (A), rotation of the third gear (5) making it possible to modulate the relative speeds of rotation of the first (B) and second (C) output shafts which are further rotated by the differential means (Δ).

2. Differential steering system according to claim 1, **characterised in that** rotation and the direction of rotation of the planetary carrier (11) are controlled by a motor (12).

3. Differential steering system according to claim 2, **characterised in that** said motor is an electric, hydraulic or pneumatic motor.

4. Differential steering system according to one of claims 1 to 3, **characterised in that** the dimensions of the different gears are selected so that the planetary carrier (11) is substantially stationary when the first and second output shafts (B, C) have identical direction and speed of rotation.

5. Differential steering system according to one of claims 1 to 4, **characterised in that** the dimensions of the first, second, third, fourth and seventh gears (1, 2, 5, 6 and 9) and of the annulus (4) are selected so as to satisfy to ±N % the following equation: Z₂.Z₉.Z₅=Z₁.Z₆.Z₄. where
Z₁ is the number of teeth of the first gear (1)
Z₂ is the number of teeth of the second gear (2)
Z₄ is the number of teeth of the annulus (4)
Z₅ is the number of teeth of the third gear (5)
Z₆ is the number of teeth of the fourth gear (6)
Z₉ is the number of teeth of the seventh gear (9)
N being less than or equal to 10%.
